# EUROPÄISCHE PATENTSCHRIFT

(11) **EP 2 737 576 B1**
(45) Veröffentlichungstag und Bekanntmachung des Hinweises auf die Patenterteilung: **27.02.2019**
(21) Anmeldenummer: 12738396.6
(22) Anmeldetag: 04.07.2012
(51) Int. Cl.: H01Q 13/22, H01P 3/02, H01P 3/12, H01P 5/103, H01Q 1/32, H04B 5/00, E01B 25/10

(54) **ANORDNUNG ZUR DATENÜBERTRAGUNG ZWISCHEN EINEM ERSTEN ANLAGENTEIL, INSBESONDERE STATIONÄRER ANLAGENTEIL, UND EINEM RELATIV ZUM ERSTEN ANLAGENTEIL VERFAHRBAREN MOBILTEIL**
ARRANGEMENT FOR DATA TRANSMISSION BETWEEN A FIRST SYSTEM COMPONENT, MORE PARTICULARLY A STATIONARY SYSTEM COMPONENT AND A MOBILE COMPONENT MOVABLE RELATIVE TO THE FIRST SYSTEM COMPONENT
ENSEMBLE DESTINÉ À LA TRANSMISSION DE DONNÉES ENTRE UNE PREMIÈRE PARTIE DE L'INSTALLATION, NOTAMMENT UNE PARTIE FIXE DE L'INSTALLATION, ET UNE PARTIE MOBILE POUVANT ÊTRE DÉPLACÉE PAR RAPPORT À LA PREMIÈRE PARTIE DE L'INSTALLATION

(30) Priorität: 27.07.2011 DE 102011108584
(43) Veröffentlichungstag der Anmeldung: 04.06.2014
(73) Patentinhaber: Sew-Eurodrive GmbH & Co. KG, 76646 Bruchsal (DE)
(72) Erfinder: SCHÄFER, Thomas, 76689 Neuthard (DE); SCHMIDT, Josef, 76676 Graben-Neudorf (DE)
(86) Internationale Anmeldenummer: PCT/EP2012/002809
(87) Internationale Veröffentlichungsnummer: WO 2013/013761

(56) Entgegenhaltungen:
- WO-A2-2011/047777
- DE-A1-102004 008 571
- DE-A1-102009 052 871

## Beschreibung

Die Erfindung betrifft eine Anordnung zur Datenübertragung zwischen einem ersten Anlagenteil, insbesondere stationärer Anlagenteil, und einem relativ zum ersten Anlagenteil verfahrbaren Mobilteil.

Es ist bekannt, Daten mittels Hohlleitern zu übertragen.

Aus der DE 10 2009 052 871 A1 ist eine symmetrische Einspeisung bekannt bei einem Schlitzhohlleiter mit einer symmetrisch angeordneten Kammreflektoreinheit.

Aus der WO 2011 / 047 777 A2 ist eine Anlage mit schienengeführtem Transportfahrzeug bekannt.

Aus der DE 10 2004 008 571 A1 ist ein Tragschienenprofil mit integriertem Schlitzhohlleiter zur Datenübertragung bekannt.

Der Erfindung liegt daher die Aufgabe zugrunde, bei der Datenübertragung in einer Anlage eine verbesserte Datenübertragung zu erreichen, insbesondere ein verbessertes Signal-Rausch-Verhältnis.

Erfindungsgemäß wird die Aufgabe bei der Anordnung zur Datenübertragung nach den in Anspruch 1 angegebenen Merkmalen gelöst.

Wichtige Merkmale der Erfindung bei der Anordnung sind, dass sie zur Datenübertragung zwischen einem ersten Anlagenteil, insbesondere stationärer Anlagenteil, und einem relativ zum ersten Anlagenteil verfahrbaren Mobilteil vorgesehen ist,
wobei das Mobilteil ein auf einer Schiene des ersten Anlagenteils verfahrbares Fahrzeug ist,
wobei der erste Anlagenteil einen Schlitzhohlleiter aufweist, wobei sich der Schlitz in Fahrtrichtung erstreckt,
wobei eine am Mobilteil angeordnete Antenne durch den Schlitz in den Hohlleiterbereich des Schlitzhohlleiters hineinragt,
wobei der Querschnitt des Hohlleiterbereichs, quer zur Fahrtrichtung gesehen, symmetrisch zum Schlitzbereich ausgeführt ist, wobei der Hohlleiterbereich aus dem Schlitzbereich und zwei, beidseitig des Schlitzbereiches angeordneten Teilbereichen, insbesondere Seitenbereichen, gebildet ist,
wobei die stationär angeordnete Antenne des ersten Anlagenteils außermittig, also quer zur Fahrtrichtung gesehen außermittig, in den Hohlleiterbereich des Schlitzhohlleiters hineinragt, also in einen der Teilbereiche,
wobei in jedem Teilbereich ein Kammreflektor angeordnet ist, wobei die Kammreflektoren in Fahrtrichtung zueinander einen Versatz aufweisen,
wobei die Anordnung ferner Befestigungsschrauben enthält und die Kammreflektoren jeweils mittels jeweiliger Befestigungsschraube mit dem Schlitzleiterprofil schraubverbunden sind.

Von Vorteil ist dabei, dass der H10 Mode der elektromagnetischen Wellen im Hohlleiter besonders effektiv anregbar ist. Somit ist eine besonders fehlerarme Datenübertragung erreichbar und Störsignale verringerbar, also das Signal-Rausch-Verhältnis verbessert.

Bei einer vorteilhaften Ausgestaltung ist das Mobilteil ein auf einer Schiene des ersten Anlagenteils verfahrbares Fahrzeug, insbesondere wobei die Schiene sich in Fahrtrichtung erstreckt und der Schlitzhohlleiter parallel zur Schiene verlegt ist,
insbesondere wobei die Schiene ein Profilschienenteil ist, insbesondere gefertigt als Aluminium-Strangguss-Profilteil. Von Vorteil ist dabei, dass eine besonders einfache Herstellung der Anlage mit geringer Teilezahl ausführbar ist, wobei Datenübertragung parallel zur Schiene verlegt ist.

Bei einer vorteilhaften Ausgestaltung ist der Schlitzhohlleiter aus einem Stranggussteil gefertigt, insbesondere Aluminium-Strangguss, insbesondere zumindest teilweise eloxierter Aluminium-Strangguss. Von Vorteil ist dabei, dass der Hohlleiter einfach fertigbar ist und eine Datenübertragung an ein Mobilteil ermöglicht ist, indem die Antenne desselben durch den in Fahrtrichtung verlaufenden Schlitz in den Hohlleiter hineinragt.

Bei einer vorteilhaften Ausgestaltung sind die Kammreflektoren gleichartig ausgeführt. Von Vorteil ist dabei, dass eine einfache Herstellung ermöglicht ist bei geringer Teilezahl.

Bei einer vorteilhaften Ausgestaltung weisen die Kammreflektoren jeweils regelmäßig voneinander beabstandete Zinken auf, die in Fahrtrichtung aufgereiht hintereinander angeordnet sind. Von Vorteil ist dabei, dass der eine Schwingungsmode der elektromagnetischen Wellen besonders effektiv anregbar ist, also andere Schwingungsmoden möglichst wenig angeregt werden.

Bei einer vorteilhaften Ausgestaltung weisen die Kammreflektoren jeweils einen Grundkörper auf, an welchem die Zinken einstückig ausgeformt oder angeformt sind, insbesondere wobei die Zinken jeweils quaderförmig oder zylinderförmig ausgeführt sind. Von Vorteil ist dabei, dass eine einfache Herstellung als Gussteil oder als Stanzteil ausführbar ist.

Bei einer vorteilhaften Ausgestaltung sind Kammreflektoren aus Kupfer-haltigem Material ausgeführt, insbesondere als Stanz-Biegeteil. Von Vorteil ist dabei, dass eine geringe Absorption auftritt und eine einfache Herstellung ermöglicht ist.

Bei einer vorteilhaften Ausgestaltung ist die stationär angeordnete Antenne von einem Steckverbinderteil gehalten, mit welchem ein Koaxialsteckverbinderteil steckverbindbar ist, insbesondere wobei das Steckverbinderteil schraubverbunden ist mit dem Schlitzhohlleiterteil.

Von Vorteil ist dabei, dass eine einfache Verbindungstechnik einsetzbar ist und die elektrische Steckverbindung zum Halten einsetzbar ist.

Bei einer vorteilhaften Ausgestaltung sind die Kammreflektoren seitlich des Schlitzbereichs, insbesondere also in den Teilbereichen, angeordnet sind. Von Vorteil ist dabei, dass die Antenne des Fahrzeugs ungestört in Fahrtrichtung im Schlitz verfahrbar ist.

Erfindungsgemäß sind die Kammreflektoren schraubverbunden mit dem Schlitzhohlleiterteil. Von Vorteil ist dabei, dass eine einfache Verbindungstechnik verwendbar ist.

Bei einer vorteilhaften Ausgestaltung ist der Schlitzhohlleiter an der Schiene formschlüssig verbunden, insbesondere eingehakt oder eingeklipst ist,
oder dass der Schlitzhohlleiter mit der Schiene einstückig ausgeführt ist, insbesondere als Stranggussprofilteil, insbesondere als Aluminium-Stranggussprofilteil. Von Vorteil ist dabei, dass eine einfache kostengünstige Herstellung ermöglicht ist, wobei die Parallelität der Fahrschiene und des Schlitzes des Schlitzhohlleiters fehlerfrei einhaltbar ist.

Weitere Vorteile ergeben sich aus den Unteransprüchen. Die Erfindung ist nicht auf die Merkmalskombination der Ansprüche beschränkt. Für den Fachmann ergeben sich weitere sinnvolle Kombinationsmöglichkeiten von Ansprüchen und/oder einzelnen Anspruchsmerkmalen und/oder Merkmalen der Beschreibung und/oder der Figuren, insbesondere aus der Aufgabenstellung und/oder der sich durch Vergleich mit dem Stand der Technik stellenden Aufgabe.

Die Erfindung wird nun anhand von schematischen Abbildungen näher erläutert:
In der Figur 1 ist eine Schrägansicht auf eine Einspeisung hochfrequenter elektromagnetischer Wellen in einen Hohlleiter gezeigt.

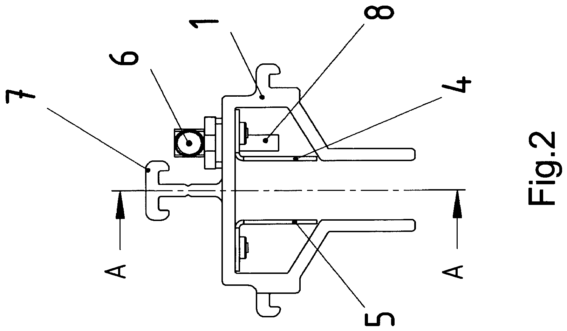

In der Figur 2 ist ein zugehöriger Querschnitt gezeigt.

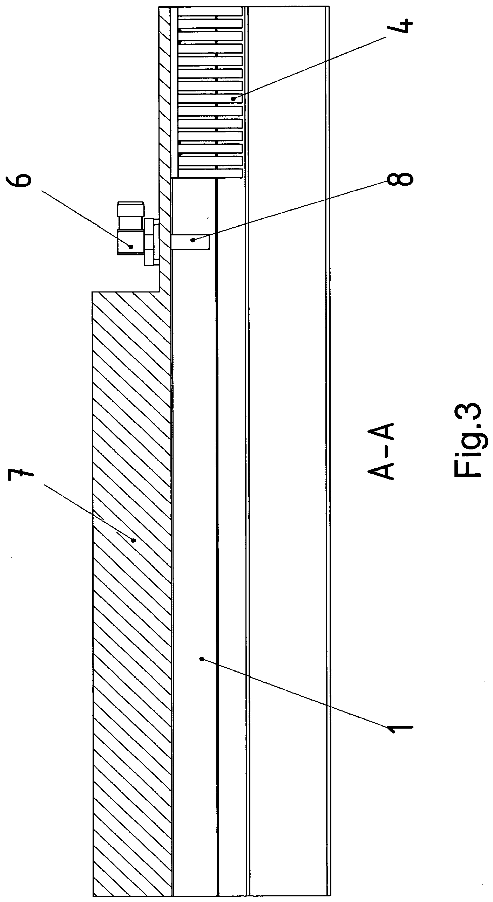

In der Figur 3 ist ein zugehöriger Längsschnitt gezeigt.

Dabei ist der Hohlleiter als Schlitzhohlleiterprofil 1 ausgeführt, so dass er einerseits als Stranggussprofilteil, insbesondere Aluminium-Stranggussprofilteil, einfach und kostengünstig herstellbar ist und so dass andererseits eine Antenne eines in Profilrichtung sich bewegenden Fahrzeugs in den Schlitz hineinragen kann und daher Daten während der Bewegung austauschbar sind.

Das Schlitzhohlleiterprofilteil 1 ist daher vorzugsweise an einem Schienenteil mittels des am Schlitzhohlleiterprofilteil angeordneten Halteteils verbunden. Auch eine andere Verbindungsart ist ausführbar.

Der Hohlraum des Schlitzhohlleiterprofilteils 1 erstreckt sich in Profilrichtung gleichförmig. Quer zur Profilrichtung ist er symmetrisch zur Mitte aufgebaut. Der Schlitz, also die Öffnung, durch welche die Antenne des Fahrzeugs hineinragen darf in den Hohlraum ist mittig angeordnet.

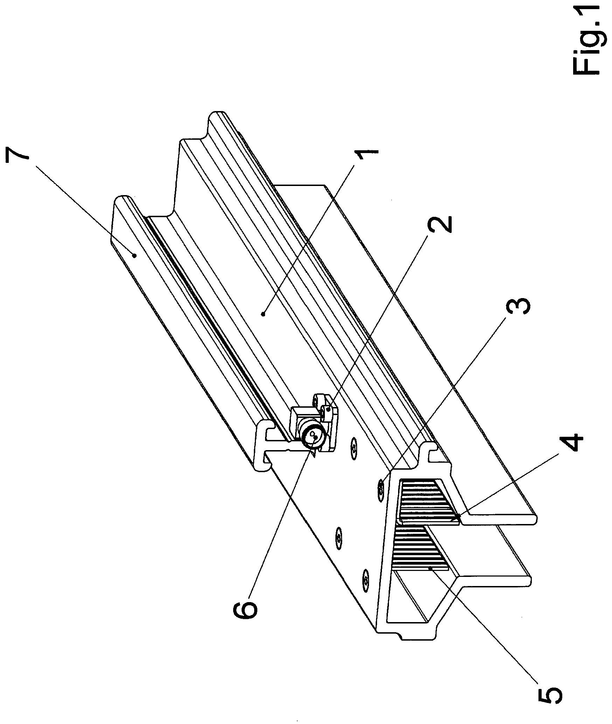

Zur Anregung des H10 Modes ragt eine in der Figur 1 nicht gezeigte Antenne 8 außermittig in den Hohlraum hinein. Der Hohlraum ist quer zur Profilrichtung und quer zum Schlitzbereich aufgeweitet, so dass er aus dem Schlitzbereich und zwei spiegelsymmetrisch zum Schlitzbereich ausgeformten Teilbereichen zusammengesetzt ist. Die Antenne 8 ragt also in einen der Teilbereiche hinein. Die Antenne 8 wird von einem Steckverbinderteil 6 für Koaxialkabel gehalten, das an der Außenseite des Schlitzhohlleiterprofils 1 angeordnet ist. Dabei ragt die Antenne 8 durch eine Ausnehmung im Schlitzhohlleiterprofil 1 hindurch. Mittels des Koaxialkabels leitet die Antenne 8 empfangen Signale an eine elektronische Schaltung weiter, die mittels des Koaxialkabels verbunden ist. Das Steckverbinderteil 6 ist mittels der Befestigungsschrauben 2 am Profilschienenteil 1 befestigt.

In Schienenrichtung hinter der Antenne 8 ist im Hohlraum in demjenigen Teilbereich, in welchen die Antenne hineinragt, ein erster Kammreflektor 4 angeordnet. Im anderen Teilbereich ist ein zweiter Kammreflektor 5 angeordnet, der jedoch in Profilrichtung versetzt angeordnet ist.

Dabei sind erster und zweiter Kammreflektor (4, 5) vorzugsweise gleichartig ausgeführt. Durch den Versatz der beiden Kammreflektoren (4, 5) zueinander ist der H10-Mode der elektromagnetischen Wellenstrahlung im Schlitzhohlleiterraumbereich einfach und ohne Aufwand anregbar.

Die Kammreflektoren 4 und 5 sind ebenfalls mittels Befestigungsschrauben 3 am Schlitzhohlleiterprofil 1 schaubverbunden.

Am Schlitzhohlleiterprofil 1 ist auch ein Haltemittel 7 ausgeformt oder vorgesehen, so dass ein Einhaken des Schlitzhohlleiterprofils 1 an einem Schienenteil, insbesondere Führungsschienenteil zur Führung des Fahrzeugs, insbesondere eines auf dem Schienenteil verfahrbaren Schienenfahrzeugs, ermöglicht ist.

### Bezugszeichenliste

- 1: Schlitzhohlleiterprofil
- 2: Befestigungsschrauben für Steckverbinderteil 6
- 3: Befestigungsschrauben für Kammreflektor
- 4: erster Kammreflektor
- 5: zweiter Kammreflektor
- 6: Steckverbinderteil für Koaxialkabel
- 7: Haltemittel
- 8: Antenne

## Patentansprüche

1. Anordnung zur Datenübertragung zwischen einem ersten stationär angeordneten Anlagenteil und einem relativ zum ersten Anlagenteil verfahrbaren Mobilteil,
wobei das Mobilteil ein auf einer Schiene des ersten Anlagenteils verfahrbares Fahrzeug ist,
wobei der erste Anlagenteil einen Schlitzhohlleiter aufweist, wobei sich der Schlitz in Fahrtrichtung erstreckt,
wobei eine am Mobilteil angeordnete Antenne durch den Schlitz in den Hohlleiterbereich des Schlitzhohlleiters hineinragt,
wobei der Querschnitts des Hohlleiterbereichs, quer zur Fahrtrichtung gesehen, symmetrisch zum Schlitzbereich ausgeführt ist, wobei der Hohlleiterbereich aus dem Schlitzbereich und zwei, beidseitig des Schlitzbereiches angeordneten Teilbereichen, gebildet ist,
wobei eine stationär angeordnete Antenne (8) des ersten Anlagenteils außermittig, also quer zur Fahrtrichtung gesehen außermittig, in den Hohlleiterbereich des Schlitzhohlleiters hineinragt also in einen der Teilbereiche,
**dadurch gekennzeichnet, dass**
in jedem Teilbereich ein Kammreflektor (4, 5) angeordnet ist, wobei die Kammreflektoren (4, 5) in Fahrtrichtung zueinander einen Versatz aufweisen,
wobei die Anordnung ferner Befestigungsschrauben (3) enthält und die Kammreflektoren (4, 5) jeweils mittels jeweiliger Befestigungsschraube (3) mit dem Schlitzleiterprofil (1) schraubverbunden sind.

2. Anordnung nach Anspruch 1,
**dadurch gekennzeichnet, dass**
das Mobilteil ein auf einer Schiene des ersten Anlagenteils verfahrbares Fahrzeug ist, wobei die Schiene sich in Fahrtrichtung erstreckt und der Schlitzhohlleiter parallel zur Schiene verlegt ist,
wobei die Schiene ein Profilschienenteil ist, das als Aluminium-Strangguss-Profilteil gefertigt ist.

3. Anordnung nach mindestens einem der vorangegangenen Ansprüche,
**dadurch gekennzeichnet, dass**
der Schlitzhohlleiter aus einem Stranggussteil gefertigt ist, also aus einem zumindest teilweise eloxierten Aluminium-Stranggussteil.

4. Anordnung nach mindestens einem der vorangegangenen Ansprüche,
**dadurch gekennzeichnet, dass**
die Kammreflektoren (4, 5) gleichartig ausgeführt sind.

5. Anordnung nach mindestens einem der vorangegangenen Ansprüche,
**dadurch gekennzeichnet, dass**
die Kammreflektoren (4, 5) jeweils regelmäßig voneinander beabstandete Zinken aufweisen, die in Fahrtrichtung aufgereiht hintereinander angeordnet sind.

6. Anordnung nach mindestens einem der vorangegangenen Ansprüche,
**dadurch gekennzeichnet, dass**
die Kammreflektoren (4, 5) jeweils einen Grundkörper aufweisen, an welchem die Zinken einstückig ausgeformt oder angeformt sind wobei die Zinken jeweils quaderförmig oder zylinderförmig ausgeführt sind.

7. Anordnung nach mindestens einem der vorangegangenen Ansprüche,
**dadurch gekennzeichnet, dass**
die Kammreflektoren (4, 5) aus Kupfer-haltigem Material ausgeführt sind als Stanz-Biegeteil.

8. Anordnung nach mindestens einem der vorangegangenen Ansprüche,
**dadurch gekennzeichnet, dass**
die stationär angeordnete Antenne (8) ein Steckverbinderteil (6) umfasst und von diesem gehalten ist, mit welchem ein Koaxialsteckverbinderteil steckverbindbar ist, wobei das Steckverbinderteil (6)schraubverbunden ist mit dem Schlitzhohlleiterteil.

9. Anordnung nach mindestens einem der vorangegangenen Ansprüche, **dadurch gekennzeichnet, dass**
der Schlitzhohlleiter an der Schiene formschlüssig verbunden ist, also eingehakt oder eingeklipst ist,
oder dass der Schlitzhohlleiter mit der Schiene einstückig ausgeführt ist als Aluminium-Stranggussprofilteil.

## Claims

1. Arrangement for transmitting data between a first system component, which is arranged in a stationary manner, and a movable component, which is movable relative to the first system component,
wherein the movable component is a vehicle which is movable on a rail of the first system component,
wherein the first system component has a slotted waveguide, the slot extending in the direction of travel,
wherein an antenna arranged on the movable component protrudes through the slot into the waveguide region of the slotted waveguide,
wherein the cross-section of the waveguide region, as seen transversely to the direction of travel, is symmetrical in relation to the slot region, the waveguide region being formed of the slot region and two sub-regions arranged on either side of the slot region,
wherein a stationary antenna (8) of the first system component protrudes in an off-centre manner, that is to say off-centre as seen transversely to the direction of travel, into the waveguide region of the slotted waveguide, that is to say into one of the sub-regions,
**characterized in that**
a comb reflector (4, 5) is arranged in each sub-region, the comb reflectors (4, 5) being offset from one another in the direction of travel,
wherein the arrangement further includes fastening screws (3), and the comb reflectors (4, 5) are each screw-connected to the slotted conductor profile (1) by respective fastening screws (3) .

2. Arrangement according to claim 1,
**characterized in that**
the movable component is a vehicle which is movable on a rail of the first system component,
wherein the rail extends in the direction of travel and the slotted waveguide is routed parallel to the rail,
wherein the rail is a profiled rail part which is manufactured as a continuously cast aluminium profiled part.

3. Arrangement according to at least one of the preceding claims,
**characterized in that**
the slotted waveguide is manufactured from a continuously cast part, that is to say from a continuously cast aluminium part that has been at least partially anodized.

4. Arrangement according to at least one of the preceding claims,
**characterized in that**
the comb reflectors (4, 5) are identical.

5. Arrangement according to at least one of the preceding claims,
**characterized in that**
the comb reflectors (4, 5) each have tines which are regularly spaced apart and which are arranged in a row one behind the other in the direction of travel.

6. Arrangement according to at least one of the preceding claims,
**characterized in that**
the comb reflectors (4, 5) each have a main body on which the tines are integrally shaped or formed, each of the tines being in the shape of a rectangular block or cylinder.

7. Arrangement according to at least one of the preceding claims,
**characterized in that**
the comb reflectors (4, 5) are made of copper-containing material as a stamped and bent part.

8. Arrangement according to at least one of the preceding claims,
**characterized in that**
the stationary antenna (8) comprises and is held by a connector part (6), to which a coaxial connector part can be connected by way of a plug-in connection,
wherein the connector part (6) is screw-connected to the slotted waveguide part.

9. Arrangement according to at least one of the preceding claims,
**characterized in that**
the slotted waveguide is connected to the rail with a form fit, that is to say is hooked or clipped into the latter,
or **in that** the slotted waveguide is formed in one piece with the rail as a continuously cast aluminium profiled part.

## Revendications

1. Agencement dévolu à la transmission de données entre une première partie d'installation, à implantation fixe, et une partie mobile pouvant être déplacée par rapport à ladite première partie de l'installation,
laquelle partie mobile est un véhicule déplaçable sur un rail de la première partie de l'installation,
laquelle première partie de l'installation est munie d'un conducteur creux fendu, la fente s'étendant dans la direction du déplacement,
sachant qu'une antenne, disposée sur ladite partie mobile, pénètre dans la région conductrice creuse dudit conducteur creux fendu, en traversant ladite fente,
la section transversale de la région conductrice creuse présentant, observée transversalement par rapport à ladite direction du déplacement, une réalisation symétrique par rapport à la zone fendue, ladite région conductrice creuse étant constituée de ladite zone fendue et de deux zones partielles situées de part et d'autre de ladite zone fendue, sachant qu'une antenne (8) de ladite première partie de l'installation, implantée de manière fixe, pénètre excentriquement, c'est-à-dire de manière excentrée en observant transversalement par rapport à la direction du déplacement, dans ladite région conductrice creuse dudit conducteur creux fendu, à savoir dans l'une desdites zones partielles, **caractérisé par le fait**
**qu'**un réflecteur (4, 5) à structure en peigne est logé dans chaque zone partielle, les réflecteurs (4, 5), à structure en peigne, étant décalés l'un de l'autre dans la direction du déplacement,
sachant, par ailleurs, que l'agencement inclut des vis de fixation (3) et que lesdits réflecteurs (4, 5) à structure en peigne sont reliés, à chaque fois, au profilé conducteur fendu (1), par vissage au moyen d'une vis de fixation (3) respective.

2. Agencement selon la revendication 1,
**caractérisé par le fait que**
la partie mobile est un véhicule déplaçable sur un rail de la première partie de l'installation,
ledit rail s'étendant dans la direction du déplacement, et le conducteur creux fendu étant disposé parallèlement audit rail,
lequel rail est une partie profilée en un rail, fabriquée en tant que pièce profilée venue d'extrusion en aluminium.

3. Agencement selon au moins l'une des revendications précédentes,
**caractérisé par le fait que**
le conducteur creux fendu est fabriqué à partir d'une pièce extrudée, à savoir une pièce venue d'extrusion en aluminium au moins partiellement anodisé.

4. Agencement selon au moins l'une des revendications précédentes,
**caractérisé par le fait que**
les réflecteurs (4, 5) à structure en peigne présentent des réalisations de même type.

5. Agencement selon au moins l'une des revendications précédentes,
**caractérisé par le fait que**
les réflecteurs (4, 5), à structure en peigne, sont respectivement pourvus de fourchons espacés les uns des autres d'intervalles réguliers et placés en succession, par rangées, dans la direction du déplacement.

6. Agencement selon au moins l'une des revendications précédentes,
**caractérisé par le fait que**
les réflecteurs (4, 5) à structure en peigne sont respectivement dotés d'un corps de base sur lequel les fourchons sont ménagés ou formés d'un seul tenant, lesdits fourchons étant de réalisation respectivement parallélépipédique, ou cylindrique.

7. Agencement selon au moins l'une des revendications précédentes,
**caractérisé par le fait que**
les réflecteurs (4, 5) à structure en peigne sont réalisés en un matériau renfermant du cuivre, en tant que pièce venue d'estampage et de pliage.

8. Agencement selon au moins l'une des revendications précédentes,
**caractérisé par le fait que**
l'antenne (8) à implantation fixe inclut une pièce (6) de connexion enfichable, par laquelle elle est retenue et à laquelle peut être raccordée, par enfichage, une pièce de connexion enfichable coaxiale,
laquelle pièce (6) de connexion enfichable est reliée, par vissage, à la partie conductrice creuse fendue.

9. Agencement selon au moins l'une des revendications précédentes,
**caractérisé par le fait que**
le conducteur creux fendu est relié au rail par complémentarité de formes, c'est-à-dire par accrochage ou par clipsage ;
ou **par le fait que** ledit conducteur creux fendu est réalisé d'un seul tenant avec ledit rail, en tant que pièce profilée venue d'extrusion en aluminium.
